# Europäisches Patentamt

# European Patent Office

# Office européen des brevets

(19)

(11) Veröffentlichungsnummer: **0 155 374**
**B1**

(12) **EUROPÄISCHE PATENTSCHRIFT**

(45) Veröffentlichungstag der Patentschrift:
**31.05.89**

(51) Int. Cl.⁴: **H 02 K 44/06**

(21) Anmeldenummer: **84115071.7**

(22) Anmeldetag: **10.12.84**

(54) Elektromagnetische Rührpumpe für Flüssigmetalle.

(30) Priorität: **16.03.84 DE 3409773**

(43) Veröffentlichungstag der Anmeldung:
**25.09.85 Patentblatt 85/39**

(45) Bekanntmachung des Hinweises auf die Patenterteilung:
**31.05.89 Patentblatt 89/22**

(84) Benannte Vertragsstaaten:
**CH DE FR GB LI NL SE**

(56) Entgegenhaltungen:
EP-A-0 077 498
DE-B-1 959 979
DE-B-2 514 684

**PATENT ABSTRACTS OF JAPAN, Band 8, Nr. 49(E-230) 1486 , 6. März 1984; JP - A - 58 201 569 (SHINKO DENKI) 24-11-1983**

(73) Patentinhaber: **INTERATOM Gesellschaft mit beschränkter Haftung, Friedrich- Ebert- Strasse, D-5060 Bergisch- Gladbach 1 (DE)**

(72) Erfinder: **Barzantny, Joachim, Im Wiesengrund 42, D-5067 Kürten- Eichhof (DE)**
Erfinder: **Lauhoff, Theodor, Dipl.- Ing., Enrico- Fermi- Strasse 2, D-5060 Bergisch- Gladbach 1 (DE)**
Erfinder: **Thissen, Klaus, Dipl.- Ing., Graeffstrasse 41, D-5000 Köln 30 (DE)**

(74) Vertreter: **Mehl, Ernst, Dipl.- Ing., Postfach 22 13 17, D-8000 München 22 (DE)**

## Beschreibung

Die vorliegende Erfindung betrifft eine elektromagnetische Rührpumpe für Flüssigmetalle nach dem Oberbegriff des Hauptanspruchs. Elektromagnetische Pumpen für Flüssigmetalle gewinnen wegen ihrer guten Regelbarkeit und ihres einfachen Aufbaus zunehmend an Bedeutung. Sie haben den Vorteil, daß keine beweglichen Teile mit der Metallschmelze in Berührung kommen, wodurch viele Probleme vermieden werden können.

In der EP-A-0 077 498 wurde bereits eine Induktionstauchpumpe vorgeschlagen, welche für Aluminium und andere bei verhältnismäßig niedriger Temperatur schmelzende Metalle geeignet ist. Diese Tauchpumpe ist zum Fördern von Flüssigmetall gedacht und eignet sich in dieser Form nicht ohne weiteres für ein Umwälzen und Durchrühren einer Schmelze.

In der EP-B-0 021 219 werden weiterhin verschiedene Induktionspumpen und Schaltungen für ihren Betrieb beschrieben. Auch diese Pumpen sind jedoch nicht zum Umwälzen und Durchrühren einer Schmelze ausgelegt, sondern für einen Leistungs-Förderbetrieb gedacht. In der DE-C2-2 118 894 wurde jedoch bereits vorgeschlagen, eine elektromagnetische Tauchpumpe zum Umwälzen einer Schmelze zu benutzen. Eine geeignete Ausführungsform wird jedoch nicht angegeben.

Aufgabe der vorliegenden Erfindung ist eine elektromagnetische Rührpumpe für Flüssigmetalle in einem Behälter, welche für einen Langzeiteinsatz geeignet ist und bei der ein problemloses Auswechseln von Verschleißteilen möglich ist.

Zur Lösung dieser Aufgabe wird eine elektromagnetische Pumpe nach dem Hauptanspruch vorgeschlagen. Erfindungsgemäß weist diese Pumpe einen ungefähr waagerecht verlaufenden Pumpkanal auf, dessen Öffnungen an zwei gegenüberliegenden Seiten eines flüssigmetallbeständigen Tauchkastens, der die Pumpe umgibt, angeordnet sind. Diese waagerechte Anordnung hat entscheidende Vorteile für den Betrieb und die Wartung der Pumpen, wie sich im folgenden noch ergeben wird. Die ganze Pumpe ist mittels einer Hängevorrichtung in ein Flüssigmetallbad eintauchbar. Der Pumpkanal weist einen länglichen Querschnitt auf und ist so angeordnet, daß die längste Ausdehnung des Querschnitts senkrecht steht. An den Breitseiten des Pumpkanals sind kammförmige Magnetspulenkerne mit Magnetspulen angeordnet, welche die für die Bewegung des Flüssigmetalls nötigen Magnet-Wanderfelden erzeugen. Der Pumpkanal besteht vorzugsweise aus einem Stück und weist einen langgestreckten lichten Querschnitt auf, wobei die bevorzugte Form für den Pumpkanal die eines flachgedrückten Rohres ist. Der waagerechte Verlauf des Pumpkanals bei gleichzeitiger Aufrechtstellung in Bezug auf den Querschnitt erweist sich sowohl in Bezug auf die Umwälzeingenschaften, wie auch in Bezug auf die Wartung als besonders vorteilhaft. Ein erfindungsgemäßer Rührer hat beispielsweise eine Förderleistung von 120 t/h Aluminium. Eine Umwälzpumpe, die eine Hängevorrichtung hat, ist aus der DE-B-2 514 648 zu entnehmen. Diese Pumpe ist aber nicht in einem Tauchkasten angeordnet und hat eine ganz andere Konstruktion, wobei das geschmolzene Metall von oben in einem ringförmigen Kanal eingesaugt wird.

In weiterer Ausgestaltung der Erfindung wird im Anspruch 2 vorgeschlagen, daß der Deckel des flüssigmetallbeständigen Tauchkastens als ein an der Aufhängung befestigtes Tragelement ausgebildet ist, wobei sowohl die Pumpenbauteile wie auch der restliche flüssigmetallbeständige Tauchkasten an diesem befestigt sind. Dabei bildet der flüssigmetallbeständige Tauchkasten ohne den Deckel zusammen mit dem Pumpkanal eine leicht auswechselbare Einheit, welche mit Befestigungsmitteln am Deckel befestigbar ist. In dieser Ausführungsform zeigen sich die besonderen Vorteile der aufrechten Anordnung des Pumpkanals. Eine erfindungsgemäße Rührpumpe braucht je nach Form des Schmelzenbehälters nicht sehr tief eingetaucht zu werden. Die Anordnung kann daher so ausgelegt werden, daß der Deckel nicht unter den Flüssigmetallspiegel gerät. In diesem Falle braucht der Deckel auch nicht unbedingt aus einem flüssigmetallbeständigen Material zu bestehen. Er kann daher aus einem tragfähigen Material, insbesondere einem Metall hergestellt werden. Durch die erfindungsgemäße Anordnung von Spulen und Pumpkanal ist es möglich, wie anhand des Ausführungsbeispiels noch näher erläutert wird, durch einfaches Lösen einiger Befestigungsmittel den flüssigmetallbeständigen Tauchkasten zusammen mit dem Pumpkanal nach unten von der übrigen Vorrichtung abzuziehen. Der Pumpkanal kann dabei ohne Probleme zwischen den Magnetkernen herausgezogen werden. Da in aggressiven Schmelzen auch ein flüssigmetallbeständiger Tauchkasten nur eine begrenzte Lebensdauer hat und auch der Pumpkanal nicht beliebig lange haltbar ist, ködnen bei der vorgeschlagenen Anordnung die mit dem Flüssigmetall in Berührung kommenden Teile als Verschleißteile ausgelegt werden, die leicht auswechselbar sind. Die restliche Pumpenanordnung bleibt wiederverwendbar.

In spezieller Ausgestaltung der Erfindung wird im Anspruch 3 folgerichtig für besonders aggressive Flüssigmetalle vorgeschlagen, den Deckel des Tauchkastens zwar aus Metall herzustellen, den Tauchkasten selbst und den Pumpkanal aus einem flüssigmetallbeständigen Material, vorzugsweise einem Keramikmaterial, herzustellen.

In weiterer Ausgestaltung der Erfindung wird vorgeschlagen, daß die kammförmigen Magnetkerne zwischen den Zähnen mit jeweils um den Rücken des Kammes gewickelten Induktionsspulen versehen sind, wobei die Zuleitung der Induktionsspulen durch den Deckel und die Aufhängung zu einem Versorgungs- und Regelungsteil verlaufen. Bei bisherigen Ausführungsformen von Induktionspumpen waren in den meisten Fällen die Magnetspulen um die Zähne gewickelt oder zwischen diesen angeordnet. Die vorgeschlagene Anordnung um den Rücken des Kammes ermöglicht, eine grössere Zahl von flachen Spulen entlang einer bestimmten Länge des Pumpkanals unterzubringen, und ermöglicht so eine kompakte Bauweise der Rührpumpe.

In spezieller Ausgestaltung der Erfindung wird im Anspruch 5 vorgeschlagen, daß die Magnetkerne aus rechteckigen, geschichteten Blechen bestehen, welche mit Hilfe einer Klemmvorrichtung zusammengehalten und am Deckel aufgehängt werden. Dabei sind mindestens drei Sorten von rechteckigen Magnetblechen vorhanden, wobei eine Sorte den Rücken des Kammes bildet, um welche die Spulen gewickelt sind, wobei eine zweite Sorte Magnetbleche die Zähne des Kammes bildet und wobei eine dritte Sorte Magnetbleche Rücken und Zähne des Kammes umschließt und mit einer Klemmvorrichtung zusammenhält. Diese Ausgestaltung, welche anhand des Ausführungsbeispiels noch näher erläutert wird, ermöglicht einen verhältnismäßig leichten Zusammenbau der Magnetkerne und -spulen und erfüllt doch die gestellten Anforderungen. Die Verwendung von geschichteten Magnetkernen aus untereinander isolierten Blechen zur Vermeidung von Wirbelströmen ist an sich bekannt. Da gerade bei in eine Flüssigmetallschmelze eintauchenden elektromagnetischen Pumpen wegen der Wärmeentwicklung die Verluste in den Magnetkernen und den -spulen so klein wie möglich gehalten werden sollen, muß jedoch auf die Auslegung der Magnetkreise besonderes Augenmerk gerichtet werden. Die vorgeschlagene Lösung erfüllt diese Bedingungen hinsichtlich Fertigung und Betrieb.

Im Anspruch 6 wird zusätzlich vorgeschlagen, daß die die Zähne des kammförmigen Magnetkerns bildenden Bleche an ihren dem Pumpkanal zugewandten Enden etwas verbreitert sind. Durch diese Maßnahme werden die Magnetfeldverläufe im Pumpkanal günstig beeinflußt.

In spezieller Ausgestaltung der Erfindung wird im Hinblick auf die leichte Auswechselbarkeit der Verschleißteile im Anspruch 7 vorgeschlagen, daß die Spulen und Magnetkerne mit ihrer Halterung verschiebbar am Deckel befestigt sein sollen. Durch Lösen der Befestigung können dann die Spulen mit ihren Magnetkernen etwas auseinandergezogen werden, wodurch der Pumpkanal beim Auswechseln noch leichter herausgezogen werden kann. Außerdem ist beim Einsetzen eines neuen Pumpkanals mit entsprechendem Tauchkasten eine mögliche Toleranz in der Fertigung ausgleichbar, indem die Spulen exakt an die Lage des neuen Pumpkanals angepaßt werden können.

Ein Ausführungsbeispiel der Erfindung ist in der Zeichnung dargestellt, und zwar zeigen

Fig. 1    einen Querschnitt durch eine erfindungsgemäße Rührpumpe in Längsrichtung des Pumpkanals,

Fig. 2    einen Querschnitt entlang der Linie II-II in Fig. 1 senkrecht zum Pumpkanal und

Fig. 3    einen vergrößerten Ausschnitt mit dem kammförmigen Magnetkern.

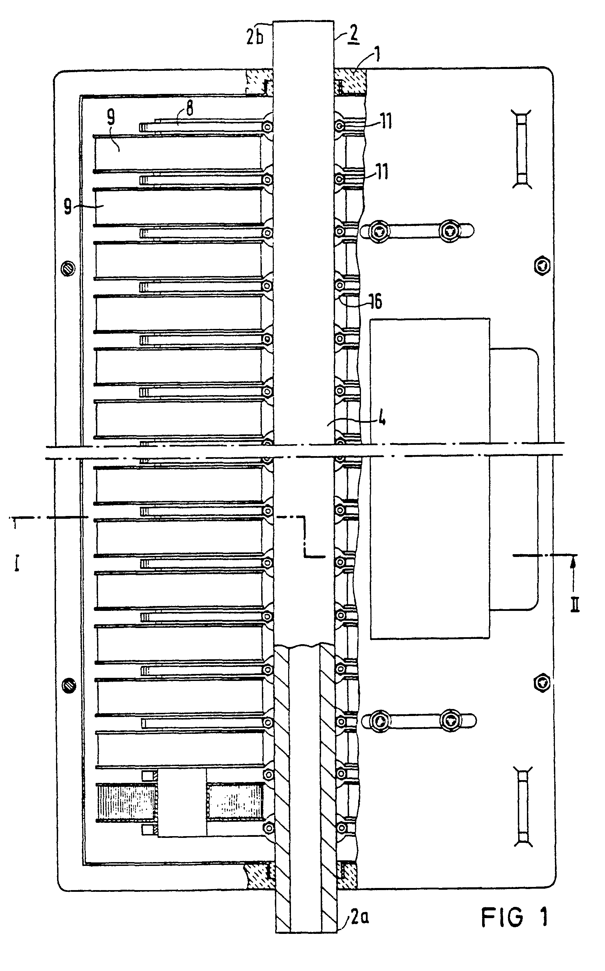

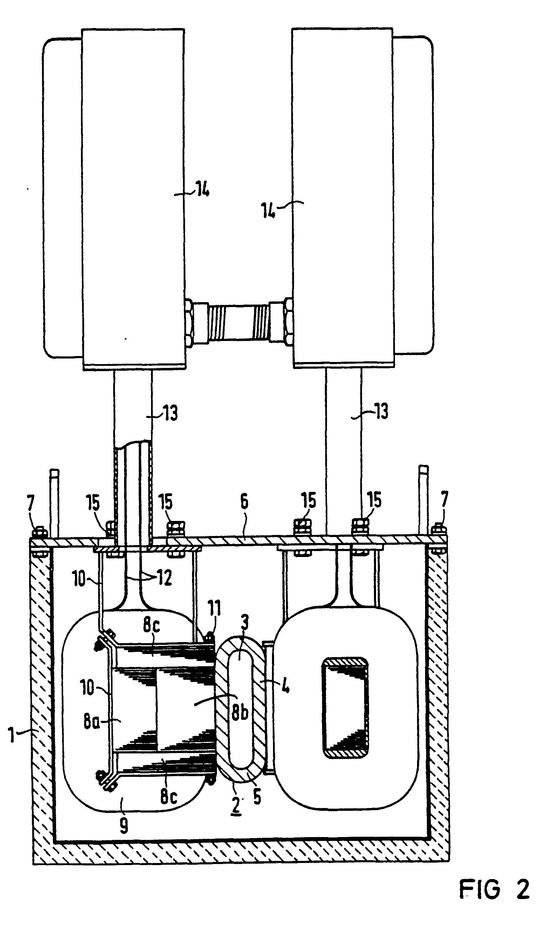

Fig. 1, 2 und 3 zeigen die erfindungswesentlichen Teile der elektromagnetischen Rührpumpe. In einem Tauchkasten 1 aus flüssigmetallbeständigem Material ist ein waagerecht verlaufender Pumpkanal 2 angeordnet. Die Enden 2a, 2b des Pumpkanals 2 ragen etwas über die Wände des Tauchkastens 1 hinaus und sind mit diesen dicht verbunden, vorzugsweise durch Keramikmasse. Der Pumpkanal selbst hat einen länglichen Querschnitt, etwa entsprechend dem eines weitgehend plattgedrückten Rohres, wobei die Form im wesentlichen abgerundet ist. Bezogen auf den Querschnitt steht der Pumpkanal 2 aufrecht in dem Tauchkasten 1. Durch den lichten Querschnitt 3 des Pumpkanals wird mit Hilfe von magnetischen Wanderfeldern das Flüssigmetall hindurchgepumpt, wodurch die Schmelze umgerührt wird. An den Breitseiten 4 des Pumpkanals 2 sind jeweils kammförmige Magnetkerne 8a, 8b, 8c angeordnet, um welche Spulen 9 gewickelt sind. Die Spulen werden mit einem Mehrphasen-Wechselstrom angesteuert, wodurch in an sich bekannter Weise in Längsrichtung des Pumpkanals 2 wandernde Magnetfelder erzeugt werden, welche die elektrisch leitfähige Schmelze in Bewegung setzen. Bei dem Ausführungsbeispiel braucht der Tauchkasten 1 nicht so tief in die Schmelze eingetaucht zu werden, daß der Deckel 6 unter den Flüssigmetallspiegel zu liegen kommt. Vielmehr wird die Pumpe nur soweit eingetaucht, daß der Deckel 6 mit dem Flüssigmetall nicht in Berührung kommt. Dadurch kann der Deckel 6 gegebenenfalls aua einem nicht gegen das Flüssigmetall beständigen Material bestehen, vorzugsweise wegen der erforderlichen Stabilität aus einem Metall. Der Deckel 6 ist dabei als Tragelement ausgebildet, an welchem sowohl der Tauchkasten 1 mit Hilfe von Befestigungschrauben 7 aufgehängt ist, als auch die Magnetkerne 8a, 8b, 8c mit ihren Spulen 9. Gleichzeitig hängt der Deckel 6 selbst an einer Aufhängung 13, welche ein Absenken oder Anheben der gesamten Vorrichtung ermöglicht. Die Magnetkerne 8a, 8b, 8c und die Spulen sind mit Hilfe einer Klemmvorrichtung 10 zusammengehalten und an dem Deckel 6 befestigt. Die Befestigung 15 an dem Deckel 6 ist dabei so gestaltet, daß Magnetkerne 8a, 8b, 8c und Spulen 9 nach Lösen der Befestigungsschrauben 15 etwas von dem Pumpkanal 2 weggeschoben werden können. Auf diese Weise wird ein leichteres Auswechseln von Pumpkanal 2 und Tauchkasten 1 erreicht. Die elektrischen Zuleitungen der Spulen verlaufen vorzugsweise durch den Deckel 6 und die Hängevorrichtung 13 nach oben zu einem Versorgungsund Steuerungsteil 14.

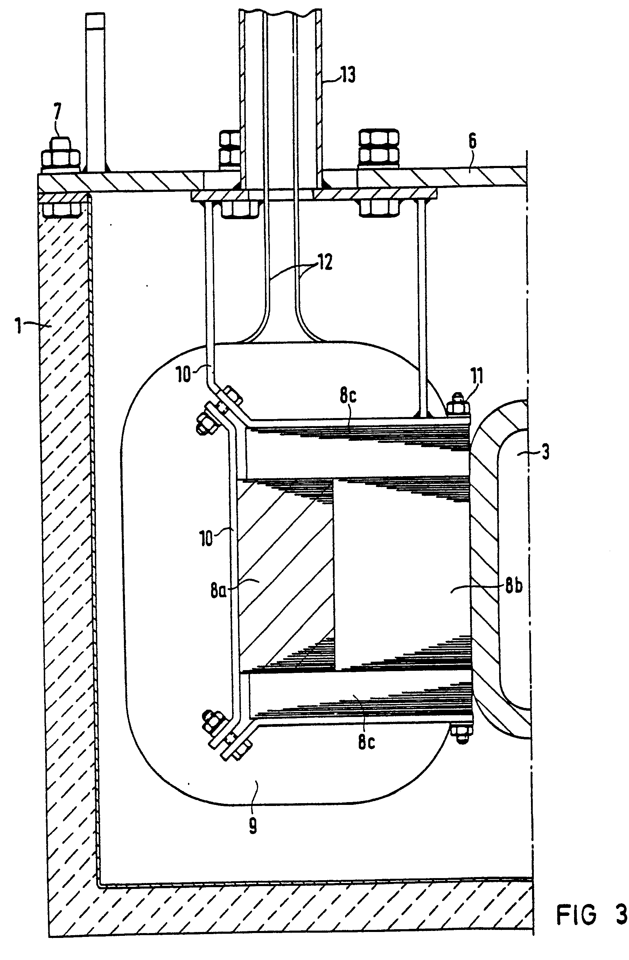

Für die genaue Ausführungsform der Magnetkerne und der Spulen gibt es im Prinzip viele Möglichkeiten. Eine in Bezug auf die Fertigung und die magnetischen Eigenschaften günstige Ausführungsform ist in Fig. 3 dargestellt. Danach bestehen die kammförmigen Magnetkerne aus mindestens drei verschiedenen im Prinzip rechteckigen Sorten von gegeneinander isolierten Blechen aus ferromagnetischem Material. Die eine Sorte 8a der Magnetbleche bildet den Rücken des Kammes und verläuft durch das Innere der Spulen 9. Eine andere Sorte 8b von Magnetblechen bildet die Zähne des Kammes und eine dritte Sorte 8c umschließt Rücken und Zähne des Kammes. Durch Zusammenwirken der Halterungselemente 10 mit den äußeren Magnetblechen 8c ergibt sich ein stabiler Aufbau des Magnetkerns. Besonders günstig ist es, wenn die Enden 16 der Magnetbleche 8b und 8c, die gegen den Pumpkanal 2 gerichtet sind, mit einer Bohrung versehen sind, durch welche eine Halteschraube 11 geführt ist. Diese Maßahme stellt sicher, daß die Magnetbleche gleichmäßig am Pumpkanal 2 entlang verlaufen. Dabei können die Enden 16 der Magnetbleche 8b und 8c zur günstigen Beeinflussung der Magnetfeldverläufe verbreitert sein.

Die erfindungsgemäße Rührpumpe eignet sich besonders für Aluminiumschmelzen und andere Metalle mit vergleichbarem Schmelzpunkt.

**Patentansprüche**

1. Elektromagnetische Pumpe zum Umwälzen und Durchrühren von Flüssigmetall in einem Behälter, wobei die Pumpe in einem flüssigmetallbeständigen Tauchkasten (1) angeordnet ist,
gekennzeichnet durch folgende Merkmale:
a) Die Pumpe weist einen ungefähr waagerecht verlaufenden Pumpkanal (2) auf, dessen Öffnungen (2a, 2b) an zwei gegenüberliegenden Seiten des flüssigmetallbeständigen Tauchkastens (1) angeordnet sind.
b) Die Pumpe ist mittels einer Hängevorrichtung (13) in ein Flüssignetallbad eintauchbar.
c) Der Pumpkanal (2) weist einen länglichen Querschnitt auf und ist so angeordnet, daß die längste Ausdehnung des Querschnitts senkrecht steht.
d) An beiden Breitseiten (4) des Pumpkanals (2) sind kammförmige Magnetspulenkerne (8a, 8b, 8c) mit Magnetspulen (9) angeordnet.
2. Elektromagnetische Pumpe nach Anspruch 1, gekennzeichnet durch folgende Merkmale:
a) Der Deckel (6) des flüssigmetallbeatändigen Tauchkastens (1) ist als an der Aufhängung (13) befestigtes Tragelement ausgebildet, wobei sowohl die Pumpenbauteile (8a, 8b, 8c, 9) wie auch der restliche flüssigmetallbestindige Tauchkasten (1) an diesem befestigt sind.
b) Der flüssigmetallbeständige Tauchkasten (1) ohne den Deckel (6) bildet zusammen mit dem Pumpkanal ein leich auswechselbares Teil, welche mit Befestigungsmitteln (7) am Deckel befestigbar ist.
3. Elektromagnetische Pumpe nach Anspruch 1 oder 2, gekennzeichnet durch folgende Merkmale:
a) Der Deckel (6) des flüssigmetallbeständigen Tauchkastens (1) besteht aus Metall.
b) Der Tauchkasten (1) selbst mit dem Pumpkanal (2) besteht aus einem flüssigmetallbeständigen Material, vorzugsweise Keramikmaterial.
4. Elektromagnetische Pumpe nach einem der vorhergehenden Ansprüche, gekennzeichnet durch folgende Merkmale:
a) Die kammförmigen Magnetkerne (8a, 8b, 8c) sind zwischen den Zähnen (8b, 8c) mit jeweils um den Rücken (8a) des Kammes gewickelten Induktionsspulen (9) versehen.
b) Die Zuleitungen (12) der Induktionsspulen (9) verlaufen durch den Deckel (6) und die Aufhängung (13) zu einem Versorgungs. und Steuerungsteil (14).
5. Elektromagnetische Pumpe nach einem der vorhergehenden Ansprüche, gekennzeichnet durch folgende Merkmale:
a) Die Magnetkerne bestehen aus rechteckigen geschichteten Blechen (8a, 8b, 8c), welche mit Hilfe einer Klemmvorrichtung (10, 11) zusammengehalten und am Deckel (6) aufgehängt werden.
b) Es sind mindestens drei Sorten von rechteckigen Magnetblechen vorhanden, wobei eine Sorte (8a) den Rücken des kammes bildet, um welchen die Spulen (9) gewickelt sind, wobei eine zweite Sorte Magnetbleche (8b) die Zähne des Kammes bildet und wobei eine dritte Sorte Magnetbleche (8c) Rücken und Zähne des Kammes umschließt und zusammen mit einer Klemmvorrichtung (10, 11) zusammenhält.
6. Elektromagnetische Pumpe nach einem der vorhergehenden Ansprüche, gekennzeichnet durch folgenden Merkmal
Die die Zähne des kammförmigen Magnetkerns bildenden Bleche (8b, 8c) sind an ihrem dem Pumpkanal (2) zugewandten Ende etwas verbreitert (16).
7. Elektromagnetische Pumpe nach einem der vorhergehenden Ansprüche, gekennzeichnet durch folgendes Merkmal:
Die Spule (9) und Magnetkerne (8a, 8b, 8c) sind mit ihrer Halterung (10) verschiebbar (15) am Deckel (6) befestigt.

## Claims

1. An electromagnetic pump for circulating and stirring liquid metals in a container, the pump being arranged in a liquid metal-resistant immersion chamber (1), characterised by the following features:

a) The pump comprises an approximately horizontally extending pump duct (2), the openings (2a, 2b) of which are arranged on two opposite sides of the liquid metal-resistant immersion chamber (1).

2) The pump can be immersed in a liquid metal bath by means of a suspension device (13).

c) The pump duct (2) comprises an elongated cross-section and is arranged in such a manner that the longest extension of the cross-section is vertical.

d) Comb-shaped magnetic coil cores (8a, 8b, 8c) having magnetic coils (9) are arranged on both broadsides (4) of the pump duct (2).

2. An electromagnetic pump according to claim 1, characterised by the following features:

a) The cover (6) of the liquid metal-resistant immersion chamber (1) is designed as a supporting element secured to the suspension device (13), both the pump components (8a, 8b, 8c, 9) and the rest of the liquid metal-resistant immersion chamber (1) being secured to said supporting element.

b) The liquid metal-resistant immersion chamber (1) without the cover (6) forms, together with the pump duct, an easily replaceable part, which can be secured to the cover by securing means (7).

3. An electromagnetic pump according to claim 1 or 2, characterised by the following features:

a) The cover (6) of the liquid metal-resistant immersion chamber (1) is made of metal.

b) The immersion chamber (1) per se together with the pump duct (2) is made of a liquid metal-resistant material, preferably a ceramic material.

4. An electromagnetic pump according to any one of the preceding claims, characterised by the following features:

a) The comb-shaped magnetic cores (8a, 8b, 8c) are provided between the teeth (8b, 8c) with induction coils (9), which are wound around the back (8a) of the comb in each case.

b) The conductors (12) of the induction coils (9) extend through the cover (6) and the suspension device (13) to a supply and control part (14).

5. An electromagnetic pump according to any one of the preceding claims, characterised by the following features:

a) The magnetic cores are formed by rectangular coated plates (8a, 8b, 8c), which are held together by means of a clamping device (10, 11) and suspended from the cover (6).

b) At least three types of rectangular magnetic plate are present, one type (8a) forming the back of the comb, around which the coils (9) are wound, a second type of magnetic plate (8b) forming the teeth of the comb and a third type of magnetic plate (8c) surrounding and holding together the rear and teeth of the comb along with a clamping device (10, 11).

6. An electromagnetic pump according to any one of the preceding claims, characterised by the following feature:

The plates (8c) forming the teeth of the comb-shaped magnetic core are somewhat enlarged at their ends (16) facing the pump duct (2).

7. An electromagnetic pump according to any one of the preceding claims, characterised by the following feature:

The coils (9) and magnetic cores (8a, 8b, 8c) are displaceably secured (15) with their retaining means (10) to the cover (6).

## Revendications

1. Pompe électromagnétique servant à faire circuler et bien agiter un métal liquide dans un conteneur, la pompe étant disposée dans une cuve d'immersion (1) résistant au métal liquide, remarquable par les caractéristiques suivantes:

a) la pompe possède un conduit (2) approximativement horizontal, dont les ouvertures (2a, 2b) sont situées sur deux côtés opposés de la cuve d'immersion (1) résistant au métal liquide;

b) la pompe peut être immergée à l'aide d'un dispositif de suspension (13) dans un bain du métal liquide;

c) le conduit (2) de la pompe possède une section transversale allongée et est disposé de telle sorte que son étendue la plus longue de sa section tranversale est verticale;

d) des noyaux en forme de peignes (8a, 8b, 8c) de bobines magnétiques, comportant des bobines magnétiques (9), sont disposés sur les deux côtés larges (4) du conduit (2) de la pompe.

2. Pompe électromagnétique suivant la revendication 1, remarquable par les caractéristiques suivantes:

a) le couvercle (6) de la cuve d'immersion (1) résistant au métal liquide est réalisé sous la forme d'un élément de support fixé à la suspension (13), aussi bien les composants (8a, 8b, 8c, 9) de la pompe que le reste de la cuve d'immersion (1) résistant au métal liquide étant fixés à cet élément de support;

b) la cuve d'immersion (1) résistant au métal liquide sans le couvercle (6) forme, conjointement avec le conduit de la pompe, une partie pouvant être aisément remplacée, qui peut être fixée sur le couvercle à l'aide de moyens de fixation (7).

3. Pompe électromagnétique suivant la revendication 1 ou 2, remarqable par les caractéristiques suivantes:

a) le couvercle (6) de la cuve d'immersion (1) résistant au métal liquide est réalisé en un metal;

b) la cuve d'immersion (1) elle-même, comportant le conduit (2), est réalisée en un matériau résistant au métal liquide, de préférence un matériau céramique.

4. Pompe électromagnétique suivant l'une des revendications précédentes, remarquable par les caractéristiques suivantes:

a) les noyaux magnétiques en forme de peignes (8a, 8b, 8c) comportent, entre les dents (8b, 8c), des bobines d'induction respectives (9), enroulées respectivement autour du dos (8a) du peigne;

b) les conducteurs d' alimentation (12) des bobines d'induction (9) traversent le couvercle (6) de la suspension (13) pour aboutir à une partie d'alimentation et de commande (14).

5. Pompe électromagnétique suivant l'une des revendications précédentes, remarquable par les caractéristiques suivantes:

a) les noyaux magnétiques sont constitués par des tôles rectangulaires superposées (8a, 8b, 8c), qui sont maintenues assemblées à l'aide d'un dispositif de serrage (10, 11) et sont suspendues au couvercle (6);

b) il est prévu au moins trois types de tôles magnétiques rectangulaires, parmi les quels un type (8a) forme le dos du peigne, autour duquel les bobines (9) sont enroulées, un second type de tôles magnétiques (8b) forme les dents du peigne et un troisième type de tôles magnétiques (8c) entoure le dos et des dents du peigne et les maintient à l'état assemblé, conjointement avec un dispositif de serrage (10, 11).

6. Pompe électromagnétique suivant l'une des revendicat ions précédentes, remarquable par la caractéristique suivante:

les tôles (8b, 8c) formant les dents du noyau magnétique en forme de peigne s'élargissent légèrement (16) au niveau de leur extrémité tournée vers le conduit (2) de la pompe.

7. Pompe électromagnétique suivant l'une des revendications précédentes, remarquable par la caractéristique suivante:

les bobines (9) et les noyaux magnétiques (8a, 8b, 8c) sont fixés sur le couvercle (6) de manière à être déplaçables (15) avec leur support (10).

EP 0 155 374 B1

FIG 1

FIG 2

FIG 3